# EUROPÄISCHE PATENTANMELDUNG

(11) **EP 1 953 932 A1**
(43) Veröffentlichungstag der Anmeldung: **06.08.2008**
(21) Anmeldenummer: 08001971.4
(22) Anmeldetag: 02.02.2008
(51) Int. Cl.: H04B 10/10

(54) **Vorrichtung zur Grobausrichtung eines optischen Freiraumstrahls**

(30) Priorität: 05.02.2007 DE 102007006414
(71) Anmelder: DLR Deutsches Zentrum für Luft- und Raumfahrt e.V., 51147 Köln (DE)
(72) Erfinder: Giggenbach, Dirk, 86932 Pürgen (DE)
(74) Vertreter: von Kirschbaum, Albrecht

(57) **Zusammenfassung**

Die Grobausrichtung eines optischen Strahls, der über ein an einem mobilen Träger, z.B. Flugzeug, fest angebrachtes Teleskop eines optischen Kommunikationsterminals empfangen oder über dieses ausgesendet wird, erfolgt mittels einer unter Steuerung um eine Azimutdrehachse drehbaren und um eine Elevationsschwenkachse schwenkbaren optischen Strahl-Ablenkeinrichtung, die vor der Teleskopapertur angeordnet ist und entweder einen einzigen beweglichen, ebenen Umlenkspiegel (1) oder alternativ eine aus einem oder mehreren zueinander beabstandeten Prismenkeilen bestehende, schwenkbare Prismenanordnung enthält. Die Strahl-Ablenkeinrichtung ist von einem kuppelartigen, für die benutzte Strahlung transparenten Dom (6) umgeben, der eine so bemessen dicke Schale (7) aufweist, dass diese als deutlich fokussierende Meniskuslinse wirkt, was dazu führt, dass der Strahldurchmesser innerhalb des Doms bereits deutlich reduziert ist. Das optische System des Teleskops ist so ausgelegt und durch Linsenelemente korrigiert, dass die vom strahlungstransparenten Dom hervorgerufenen optischen Verzerrungen exakt berücksichtigt und korrigiert sind.

Anwendung bei optischer Freiraumkommunikation mit bemannten und unbemannten Flugzeugen.

## Beschreibung

Die Erfindung betrifft eine Vorrichtung zur Grobausrichtung eines optischen Strahls, der über ein an einem fliegenden, fahrenden oder schwimmenden Träger fest angebrachtes Teleskop eines optischen Freiraumstrahl-Kommunikationsterminals empfangen oder über dieses ausgesendet wird, mittels einer unter Steuerung um eine Azimutdrehachse drehbaren und um eine Elevationsschwenkachse schwenkbaren, vor der Teleskopapertur angeordneten optischen Strahl-Ablenkeinrichtung, die entweder aus einem einzigen beweglichen ebenen Umlenkspiegel besteht, der an einer Haltevorrichtung um eine im wesentlichen horizontal verlaufende Achse, welche die Elevationsschwenkachse darstellt, schwenkbar gelagert ist, wobei die Haltevorrichtung die Teleskopapertur strahleinwirkungsfrei umgreift und als Ganzes um eine im wesentlichen vertikal verlaufende Achse, welche die Azimutdrehachse darstellt, drehbar gelagert ist und wobei der Umlenkspiegel in seiner durch die Stellung der Elevationsschwenkachse bestimmten, zentralen Ruhestellung unter etwa 45° zu dem in das Teleskop eintretenden bzw. aus diesem austretenden Strahl geneigt angeordnet ist, so dass er in dieser Ruhestellung etwa eine 90°-Ablenkung des Strahls zur Seite und dementsprechend etwa eine horizontale Sichtrichtung erzeugt, oder aber aus einer aus einem oder mehreren zueinander beabstandeten Prismenkeilen zusammengesetzten Prismenanordnung besteht, die an einer Haltevorrichtung um eine im wesentlichen horizontal verlaufende Achse, welche die Elevationsschwenkachse darstellt, schwenkbar gelagert ist, wobei die Haltevorrichtung die Teleskopapertur strahleinwirkungsfrei umgreift und als Ganzes um eine im wesentlichen vertikal verlaufende Achse, welche die Azimutdrehachse darstellt, drehbar gelagert ist und wobei die Prismenanordnung in ihrer durch die Stellung der Elevationsschwenkachse bestimmten, zentralen Ruhestellung so eingestellt ist, dass sie in dieser Ruhestellung etwa eine 90°-Ablenkung des Strahls zur Seite und dementsprechend etwa eine horizontale Sichtrichtung erzeugt.

Die Erfindung soll die Realisierung von optischen Richtfunkstrecken, d.h. optischen Freistrahl-Kommunikationsverbindungen, zur hochratigen Kommunikation zwischen Flugzeugen ziviler oder militärischer Art oder aller anderen Arten von mobilen Kommunikationspartnern, wie z.B. Landfahrzeuge, Luftfahrzeuge, Schiffe, Satelliten, Raumsonden, ermöglichen. Diese mobilen optischen Kommunikationsverbindungen (englisch "Mobile Free-space Optics"; MFSO) sollen zukünftig breitbandige Kommunikation von bzw. zwischen (Luft-)Fahrzeugen ermöglichen.

Im Unterschied zu optischen Inter-Satelliten-Links müssen bei avionischen optischen Kommunikationsverbindungen auf Grund der starken Vibrationen und atmosphärischer Kohärenzstörungen größere Signal-Divergenzwinkel und Empfangswinkel als beugungsbegrenzt möglich verwendet werden. Damit einher geht eine technisch unvermeidliche Verringerung der Übertragungseffizienz.

Zur Zeit wird Kommunikation mit mobilen Partnern üblicherweise mittels Funkübertragungsstrecken abgewickelt, also unter Verwendung von Radiowellen mit typischen Frequenzen zwischen wenigen MHz und einigen GHz. Eine solche Funkübertragung weist aber Bandbreitenbeschränkungen auf, da das Funkwellenspektrum begrenzt und seine Nutzung reglementiert ist. Auch kommt es zu Interferenzen zwischen verschiedenen Sendern und zu hohem Sendeleistungsverbrauch, wenn sehr hohe Datenraten, z.B. einige Gbps, über große Strecken übertragen werden sollen.

Optische Richtfunkstrecken dagegen erlauben dank ihrer extrem hohen Trägerfrequenz, z.B. einige hundert THz bei Laser-Quellen im nahen Infrarot, eine Konzentration der Signalleistung auf einen sehr kleinen Bereich um den den Kommunikationspartner bildenden Empfänger. Das Datensignal kann dabei durch verschiedene Modulationsarten auf den optischen Träger moduliert sein. In erster Linie wird hier die einfache Intensitätsmodulation (On-off-keying; OOK) oder die Pulsphasenmodulation (Pulse Position Modulation; PPM) angewandt.

Voraussetzung für die Verwendung einer optischen Richtfunkstrecke ist lediglich eine dämpfungsarme Verbindung. Die Dämpfung wird im wesentlichen durch Nebel, Wolken, Staub und Dunst in der Atmosphäre bestimmt, wobei die Wolken in avionischen Verbindungen den größten Einfluss haben. Aufgrund der Schichtung der Atmosphäre ist die vertikale Ausdehnung von Wolken begrenzt, so dass oberhalb gewisser Flug-Höhen eine wolkenfreie Sichtverbindung garantiert werden kann.

Die notwendig scharfe Bündelung des Sendesignalstrahls erfordert allerdings eine präzise Regelung dieses Strahls (PAT; Pointing, Acquisition, and Tracking; Strahlausrichtung, -einfangen und -verfolgung). Strahldivergenzwinkel im Bereich weniger tausendstel Grad sind hier typisch. Hiervon betroffen sind zunächst das Auffinden des Kommunikationspartners, dann die Regelung der Richtung des ausgehenden Sendesignalstrahles und auch das Verfolgen des Empfangsstrahles, also quasi die Blickrichtung.

Insbesondere bei avionischen Trägerplattformen erfordern die störenden Beeinflussungen infolge von Vibrationen durch Antriebsaggregate, von Schwankungen auf Grund von Luftturbulenzen und von Brechungsindex-Turbulenzen auf Grund atmosphärischer Effekte eine sehr robuste und schnelle Strahlregelung.

Angesichts dieser starken Richtungsstörungen wird bei Kommunikationsterminals an Bord avionischer Trägerplattformen der Divergenzwinkel absichtlich etwas größer eingestellt, als er theoretisch auf Grund der Aperturgrößen sein könnte. Dadurch verringern sich die PAT-Anforderungen etwas. Die Teleskop-Aperturfläche wird hierbei nur für den Empfang des vom Kommunikationspartner kommenden Signals voll ausgenutzt. Zum Senden wird lediglich ein Teil der vollen Teleskop-Aperturfläche genutzt. Dieses Vorgehen erlaubt das einfache Einkoppeln des Sendesignals in den Empfangspfad, ohne dass es zu starken Abschattungsverlusten kommt.

Eine volle Ausnutzung der Teleskop-Aperturfläche für den Sendestrahl erfordert kompliziertere Formen der Einkopplung des Sendesignals in den Empfangspfad. Hierzu wären nach dem gegenwärtigen Stand der Technik hochpräzise und empfindliche optische Aufbauten erforderlich, deren optimale Qualität bei den starken und langzeitigen Belastungen im jahrelangen Einsatz eines Flugzeugs oft nicht gewährleistet werden kann.

Für mobile optische Freiraumstrahl-Kommunikationsverbindungen ist es erforderlich, die Teleskope entsprechender Partnerterminals präzise aufeinander auszurichten und durch optische Strahlverfolgung aufeinander ausgerichtet zu halten. Für diese Aufgabe kommen sogenannte Grobausrichtemechanismen (CPA; Coarse Pointing Assembly) zum Einsatz, welche es dem Terminal durch bewegliche Spiegel vor dem eigentlichen Kommunikationsterminal oder durch Verdrehen des gesamten Terminals erlauben, in einen möglichst großen Bereich des Raumes "blicken" zu können. Dieser Bereich wird Field-of-Regard (FoR) genannt und ist typischerweise hemisphärisch, da die andere Hemisphäre des Raumes durch den Körper des Trägers (Flugzeug, Fahrzeug, Satellit) selber abgedeckt bleibt.

Ein größeres Field-of-Regard (FoR) erreicht man durch eine exponierte Anbringung des Terminals, z.B. auf Tragflächen oder an aus der Trägerstruktur hervorragenden Auslegern. Zusätzlich zur Bewegung des Grobausrichtemechanismus (CPA) ist meist noch ein Feinausrichtemechanismus (FPA; Fine Pointing Assembly) zur präzisen Ausregelungen von Vibrationen und Erschütterungen erforderlich, der jedoch nicht Gegenstand der vorliegenden Erfindung sein soll. Die Trennung zwischen den Trackinggenauigkeiten von Grobausrichtemechanismus (CPA) und Feinausrichtemechanismus (FPA) liegt in etwa bei einem Grad oder etwas darunter.

Zur bidirektionalen Kommunikation wird über den Grobausrichtemechanismus (CPA) sowohl der ausgehende Sendestrahl auf den Kommunikationspartner ausgerichtet als auch die Blickrichtung des Empfängers auf den eingehenden optischen Strahl vom Partner eingestellt.

Bei einer herkömmlichen zweiachsigen Strahlausrichtvorrichtung mit Azimut- und Elevationseinstellung kommt es in der Richtung der Azimutachse zu einer Singularität. Dies bedeutet, dass in Azimutachsrichtung in mobilen Tracking-Szenarien die zur exakten Strahlverfolgung erforderliche Azimutgeschwindigkeit unendlich groß werden kann.

Diese Singularitäten sind bei zweiachsigen Teleskopmontierungen unvermeidbar und führen normalerweise zu einem Trackingverlust. Wenn die Eigenschaften des Grobausrichtemechanismus (CPA) also nicht mit den Ausrichteanforderungen des konkreten Szenarios abgestimmt werden, verbieten sich bestimmte einfache und platzsparende Lösungen.

Um den Luftwiderstand eines optischen Kommunikationsterminals in aeronautischen Anwendungen klein zu halten, damit der Treibstoffverbrauch und die Flugeigenschaften nicht verschlechtert werden, ist ein möglichst kleiner Querschnitt des aus dem Flugkörper ragenden optischen Kommunikationsterminals wünschenswert. Dies widerspricht aber meist der Anforderung an ein mindestens hemisphärisches Field-of-Regard (FoR) des Terminals, also dem Raumwinkel-Sichtbereich, auf den sich das Teleskop des Terminals ausrichten kann.

Grobausrichtemechanismen (CPAs) mit großem Field of Regard (FoR) bestehen üblicherweise aus mindestens zwei Umlenkspiegeln, welche als zweiachsiges Periskop angeordnet sind. Dies wiederum erzeugt eine voluminöse Struktur. Will man diesen Aufbau eines Grobausrichtemechanismus (CPA) durch einen starren Dom schützen, so wird dessen Durchmesser etwa viermal so groß wie der effektive optische Aperturdurchmesser des Grobausrichtemechanismus (CPA). Dieser effektive Aperturdurchmesser bedingt aber die Übertragungsqualität des Terminals und sollte daher möglichst groß sein.

Aus US 5 390 040 A ist ein optischer Transceiver für Freiraum-Kommunikationsverbindungen bekannt, der eine Vorrichtung zur Ausrichtung eines optischen Strahls mittels einer um eine Azimutdrehachse drehbaren und um eine Elevationsschwenkachse schwenkbaren Strahlablenkeinrichtung aufweist, die vor einer Teleskopapertur angeordnet ist. Der optische Strahl wird dabei über ein an einem fliegenden Träger fest angebrachtes Teleskop eines optischen Freiraumstrahl-Kommunikationsterminals empfangen oder über dieses ausgesendet.

Als Strahlablenkeinrichtung ist ein einziger beweglicher ebener Umlenkspiegel vorgesehen, der an einer die Teleskopapertur strahleinwirkungsfrei umgreifenden und als Ganzes um die vertikal verlaufende Azimutdrehachse drehbar gelagerten Haltevorrichtung um die horizontal verlaufende Elevationsschwenkachse schwenkbar gelagert ist. Der Umlenkspiegel ist dabei in seiner durch die Stellung der Elevationsschwenkachse bestimmten, zentralen Ruhelage unter etwa 45° zu dem in das Teleskop eintretenden bzw. aus diesem austretenden Strahl geneigt angeordnet, so dass er in dieser Ruhestellung etwa eine 90°-Ablenkung des Strahls zur Seite und dementsprechend etwa eine horizontale Sichtrichtung erzeugt.

Aus US 6 449 076 B1 ist eine an einem fliegenden Träger angebrachte Vorrichtung zur Ausrichtung eines optischen Strahls bekannt, bei der als Strahl-Ablenkeinrichtung eine aus zwei zueinander beabstandeten Prismenkeilen bestehende Prismenanordnung vorgesehen ist.

Aufgabe der vorliegenden Erfindung ist es, für eine Vorrichtung zur Grobausrichtung eines optischen Freiraumstrahls Voraussetzungen zu schaffen, die einen äußerst platzsparenden, strahlungsdurchlässig gekapselten Aufbau bei schneller Schwenkbarkeit und Verzerrungsfreiheit des Strahls ermöglichen.

Gemäß der Erfindung, die sich auf eine Vorrichtung zur Grobausrichtung eines optischen Freiraumstrahls der eingangs genannten Art bezieht, wird diese Aufgabe dadurch gelöst, dass die Strahl-Ablenkeinrichtung von einem kuppelartigen, für die benutzte Strahlung transparenten Dom umgeben ist, der als Hemisphäre oder noch etwas größer als abgeschnittene Sphäre gestaltet ist und eine so bemessen dicke Schale aufweist, dass diese als deutlich fokussierende Meniskuslinse wirkt, was dazu führt, dass der Strahldurchmesser innerhalb des Doms bereits deutlich reduziert ist, und dass das optische System des Teleskops so ausgelegt und durch Linsenelemente korrigiert ist, dass die vom strahlungstransparenten Dom hervorgerufenen optischen Verzerrungen exakt berücksichtigt und korrigiert sind.

Um die Vorrichtung zur Grobausrichtung eines optischen Freiraumstrahls gemäß der vorliegenden Erfindung vor Winddruck zu schützen, ist es an sich bereits bekannt, sie von einem kuppelartigen, für die benutzte Strahlung transparenten Dom zu umgeben. In diesem Zusammenhang werden als Stand der Technik beispielsweise US 6 347 001 B1 und US 5 796 474 B1 genannt. Ein dem Luftanströmdruck an einem Flugzeug ausgesetzter Grobausrichtemechanismus (CPA) muss nämlich vor diesem Staudruck geschützt werden.

Hierzu eignet sich eine strahlungstransparente Haube, die auch als Dom bezeichnet wird. Diese Schutzeinrichtung hat aber den Nachteil, dass das kuppelförmig gekrümmte, strahlungstransparente Material optische Verzerrungen in Form von Abbildungsfehlern erzeugt, welche das nachfolgende optische System im Teleskop des Kommunikationsterminals stark stören. Es kann keine saubere Fokussierung des eintreffenden Signals mehr stattfinden. Ebenso wird der ausgesendete Strahl stark und unkontrolliert aufgeweitet. Beide Störvorgänge führen zu starken Systembeeinträchtigungen, die bei der Vorrichtung gemäß der vorliegenden Erfindung vermieden sind.

Infolge der deutlich fokussierenden Meniskuslinse ist bei der Vorrichtung nach der Erfindung nur ein kleinerer und damit schnellerer Umlenkspiegel im Grobausrichtemechanismus (CPA) erforderlich. Inwieweit das dickere Dommaterial die Dimension und das Gewicht negativ beeinflusst, muss je nach konkreter Realisierung abgestimmt werden.

Die vom strahlungstransparenten Dom hervorgerufenen optischen Verzerrungen werden bei der Auslegung des optischen Systems der Vorrichtung nach der vorliegenden Erfindung exakt berücksichtigt und durch andere Linsenelemente wieder korrigiert. Dies gelingt bei der einen Umlenkspiegel aufweisenden Vorrichtungsvariante nach der vorliegenden Erfindung dann, wenn der Drehpunkt des Umlenkspiegels exakt in der Mitte des sphärischen Domes positioniert wird, da dann die Abbildungsfehler in jeder Blickrichtung die gleichen sind und durch die Meniskuslinse modelliert werden können.

Eine konstante Dicke und exakte Formung des Domes ist dabei eine wichtige Voraussetzung. Die Ausführung des Domes kann als Hemisphäre bzw. noch etwas größer als abgeschnittene Sphäre oder als sich mit der Azimutdrehung mitdrehendes Sphärensegment mit ansonsten schützender Haube gestaltet sein.

Der Grobausrichtemechanismus (CPA) wird in vorteilhafter Weise entweder durch einen nicht drehbaren, also starr montierten, strahlungstransparenten, sphärischen, kuppelförmigen Dom geschützt, dessen optisch verzerrende Eigenschaften durch weitere im Teleskop befindliche Korrekturoptiken wieder ausgeglichen werden. Hierzu ist es erforderlich, dass sich der Drehmittelpunkt des Umlenkspiegels exakt im Mittelpunkt der Domsphäre befindet.

Der Vorteil dieser Lösung ist die nicht bewegliche Domkuppel, welche dann auch keine Abnutzung von Drehlagern verursacht. Zudem ist das gesamte System gekapselt, damit der Grobausrichtemechanismus (CPA) nicht den Umwelteinflüssen ausgesetzt ist, z.B. der geringen Temperatur und dem niedrigen Luftdruck in größerer Flughöhe. Eine möglicherweise auftretende Verkratzung der Domvorderhälfte durch Staubteilchen, welche die anströmende Luft enthält, kann durch härtende Beschichtungen des Domes vermieden werden.

Es kann als strahlungstransparenter Dom als Alternative aber auch keine komplett starre Sphäre angebracht werden, sondern eine sich mit dem Azimutdrehwinkel mitdrehende Haube, welche nur in Sichtrichtung vor dem Spiegel entlang des Elevationsbereichs ein strahlungstransparentes Sphärensegment aufweist. Dieses kann z.B. als seitlich beschnittene Meniskuslinse in üblicher Linsensfertigungstechnologie aus einem Glaskörper geschliffen werden und zusätzlich mit Standardmethoden mit einem Hintergrundlichtfilter und Oberflächenhärtung beschichtet werden.

Der Vorteil ist ein besserer Schutz des strahlungstransparenten Sphärensegments, da es aus der anströmenden Luft, die verkratzende Staubteilchen enthalten kann, in Lee-Richtung gedreht werden kann, wenn die Kommunikationsrichtung nicht nach vorne weist.

Das Dommaterial sollte in vorteilhafter Weise mit einem optischen Filter für kürzere Wellenlängen beschichtet sein, um das störende Hintergrundlicht zu reduzieren. Visuell würde der Dom daher für das Auge unsichtbar sein. Die Kommunikationswellenlänge liegt dabei vorteilhaft im nahen bis mittleren Infrarotbereich (über 800 nm). Typische, aber nicht ausschließliche Wellenlängen sind 850 nm oder 1550 nm.

Um keine Beschneidung des optischen Strahls zu verursachen, sollte der ebene Umlenkspiegel bereits in dieser Stellung √2-mal so lang wie breit sein. Um einen noch größeren Sichtbereich nach unten zu ermöglichen, sollte er etwa 2-mal so lang wie breit sein. Der ebene Umlenkspiegel weist demnach eine elliptische oder ovale Umfangsform auf, wobei die kürzere Achse der Spiegel-Umfangsellipse bzw. des Spiegel-Umfangsovals im wesentlichen mit der Elevationsschwenkachse zusammenfällt.

Die Haltevorrichtung weist vorteilhaft zwei von einer mit einer zentralen Strahldurchlassöffnung versehenen, d.h. gewöhnlich kreisringförmigen Grundplatte in sich zueinander diametral gegenüberstehender Lage senkrecht abstehende und damit parallel zur Azimutdrehachse verlaufende Stützen auf, an denen in der Variante mit dem Umlenkspiegel dieser Umlenkspiegel bzw. in der Variante mit Prismenanordnung die die Prismenkeile enthaltende Prismenanordnung zur Elevationswinkeleinstellung schwenkbar gelagert ist.

Der in der Haltevorrichtung vorteilhaft an den beiden senkrecht abstehenden Stützen aufgehängte und dort drehbar um eine horizontal verlaufende Elevationsschwenkachse schwenkbare Umlenkspiegel bzw. die die Prismenkeile enthaltende Prismenanordnung wird vorteilhaft mittels eines gesteuerten Elektromotors geschwenkt.

Der gesamte Aufbau von Umlenkspiegel bzw. Prismenanordnung mit Haltevorrichtung und Motor zur Elevationsschwenkung lässt sich zweckmäßig in Azimutrichtung drehen. Um eine unbegrenzte Azimut-Drehbewegung zu ermöglichen, werden Kabelverbindungen zu dem die Elevationsschwenkung bewirkenden Motor zweckmäßig vermieden. Daher werden in vorteilhafter Weise Kontakte über elektrische Schleifringe zur Übertragung der elektrischen Signale vom und zum Motor verwendet.

In vorteilhafter Weise kann mit der erfindungsgemäß ausgebildeten Vorrichtung zur Grobausrichtung die Lage der Singularität einer Azimut-Elevations-Dreh-Schwenkvorrichtung (AzEl-Mount) auf die unwahrscheinlichste Verbindungsrichtung in einem aeronautischen Verbindungsszenario zum Boden oder zu anderen Flugzeugen senkrecht nach unten, also nach Nadir, abgestimmt werden. Diese Verbindungsrichtung kann nur sehr kurzzeitig während eines direkten Überfluges über einer optischen Bodenstation auftreten. Für ein Verbindungsszenario zwischen Flugzeugen ist diese Situation unwahrscheinlich. Eine entsprechende kurze Verbindungsunterbrechung von nur wenigen Sekunden ist in jedem Fall akzeptabel.

Eine weitere Anwendung besteht in der Verbindung von einem Flugzeug zu einem Satelliten. Handelt es sich dabei um einen geostationären Satelliten, so ist die Elevation zu diesem in mittleren geographischen Breiten deutlich geringer als 90°. Somit kann hier ebenfalls davon ausgegangen werden, dass die erforderliche Blickrichtung nicht oder nur äußerst selten im verbotenen Bereich liegt.

Damit verbunden kann man sich in vorteilhafter Weise den Umstand zunutze machen, dass für Verbindungsrichtungen nahe der Singularität die Distanz zwischen den Kommunikationspartnern verringert ist, da in der Atmosphäre die Kommunikationspartner vertikal höchstens 10 km Distanz haben. Dagegen dominiert die horizontale Distanz mit einigen zehn bis hundert Kilometern. Dadurch kann ein erheblicher Verlust durch das Vorbeistrahlen an dem für diese Verbindungsrichtung zu kleinen Umlenkspiegel bzw. der zu kleinen Prismenanordnung akzeptiert werden, da dann gleichzeitig die zu überbrückende Distanz und damit der Freiraumverlust minimal sind.

Der gesamte Aufbau des Grobausrichtemechanismus (CPA) bleibt damit sehr klein. Der Durchmesser des strahlungstransparenten Domes kann auf etwa das doppelte des effektiven optischen Aperturdurchmessers, der im Falle der ersten Ausführungsvariante der Länge der kleineren Achse des ellipsenförmigen oder ovalen Umlenkspiegels entspricht, begrenzt werden.

Für die Kommunikation von einem Flugzeug zum Boden wird ein derartiges optisches Kommunikationsterminal vorteilhaft unter dem Flugzeugrumpf angebracht. Die Blickrichtung ist dann zwar immer nach unten zum Boden; allerdings kommt es durch die seitlich gekippte Lage beim Kurvenflug ("Bank-Angle") auch zu Blickrichtungen nach oben, bezogen auf das Koordinatensystem des Flugzeugrumpfs.

Die Vorrichtung zur Grobausrichtung eines optischen Strahls nach der vorliegenden Erfindung erlaubt in beiden Ausführungsvarianten, also mit einem einzigen Umlenkspiegel bzw. mit Prismenanordnung, und bei Verwendung eines umgebenden sphärischen Doms Elevationswinkel nach oben, um mit diesen Fluglagen zurecht zu kommen. Außerdem erlaubt die unlimitierte Azimutbewegung des Grobausrichtemechanismus (CPA) einen unbegrenzten Kreisflug des Flugzeugs z.B. über einem Beobachtungsgebiet.

Zusammenfassend ist festzustellen, dass der durch die vorliegende Erfindung erreichte Einsatz nur eines Umlenkspiegels bzw. einer aus Prismenkeilen bestehenden Prismenanordnung für Azimut und Elevation einen äußerst platzsparenden Aufbau ermöglicht. Um mit der dabei unvermeidlichen Beschneidung des Strahls am Rand und der Singularität der Vorrichtung zurecht zu kommen, werden beide verbotenen Sichtbereiche so ausgerichtet, dass diese mit der unwahrscheinlichsten Sichtrichtung in diesem Ausrichteszenario - nämlich senkrecht nach unten - zusammenfallen.

Selbstverständlich kann die Vorrichtung nach der vorliegenden Erfindung nicht nur nach Nadir sondern auch nach oben weisend (Zenit) montiert werden, um z.B. mit anderen Flugzeugen, HAPs oder Satelliten zu kommunizieren. Auch die Montage auf anderen mobilen Trägern, wie z.B. Bodenfahrzeuge oder Schiffe, bietet sich an.

Zweckmäßige Verwendungsmöglichkeiten der erfindungsgemäßen Vorrichtung bestehen bei der optischen Freiraum-Kommunikation mit Flugzeugen, aber auch bei der optischen Kommunikationsanbindung von unbemannten Luftfahrzeugen (U-AV; Unmanned Air Vehicles) zur zivilen oder militärischen Erkundung und Überwachung.

Vorteilhafte Weiterbildungen und Ausgestaltungen der Erfindung sind in den sich auf den Patentanspruch 1 unmittelbar oder mittelbar rückbeziehenden Unteransprüchen angegeben.

Die Erfindung wird nachfolgend anhand von Zeichnungen erläutert. Es zeigen:
- Fig.1: in Schrägansicht ein Ausführungsbeispiel einer Vorrichtung nach der Erfindung mit einer aus einem einzigen Umlenkspiegel bestehenden Strahl-Ablenkeinrichtung in einem strahlungs-transparenten, starr montierten Dom,
- Fig.2: in einer schematischen Ansicht mit Strahlverlauf eine dicke Domschale, die als verkleinernde Meniskuslinse wirkt,
- Fig.3: ein Kommunikationsszenario Flugzeug-Boden und UAV(Unmanned Air Vehicle)-Boden über einem Beobachtungsgebiet, und
- Fig.4: in schematischer Darstellung ein Ausführungsbeispiel einer Vorrichtung nach der Erfindung mit einer aus zwei Prismenkeilen einer Prismenanordnung bestehenden Strahl-Ablenkeinrichtung.

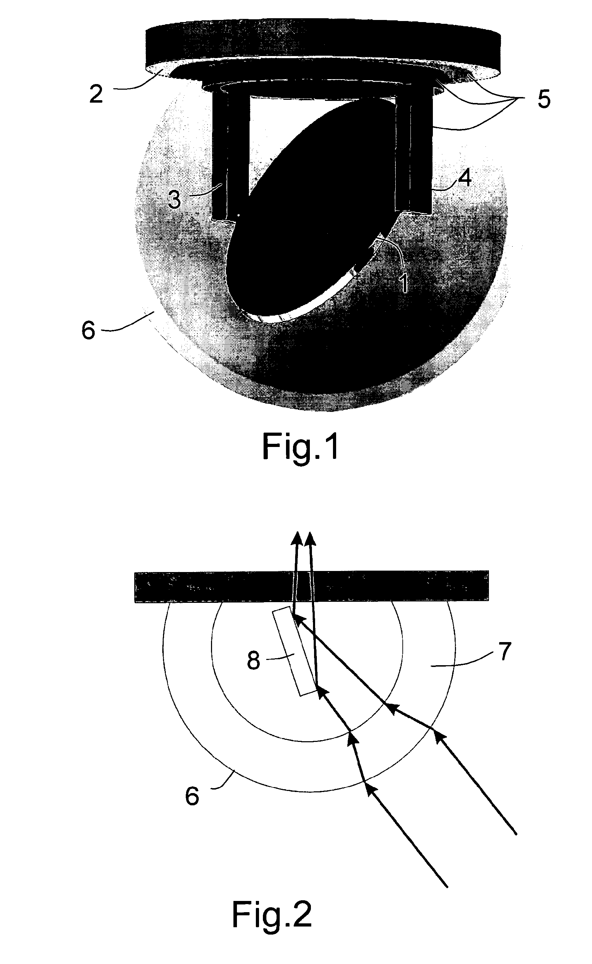

Das in Fig.1 dargestellte Ausführungsbeispiel einer erfindungsgemäßen Vorrichtung zur Grobausrichtung eines optischen Strahls ist an einem den Träger bildenden Flugzeug senkrecht nach unten hängend unter einem Teleskop eines Flugzeug-Kommunikationsterminals angebracht und dient zur Verwendung für eine Flugzeug-Boden-Kommunikationsverbindung. Das eigentliche Teleskop und die restliche Terminal-Hardware befinden sich innerhalb des Flugzeugs und sind in Fig.1 nicht dargestellt.

Die Vorrichtung zur Strahlgrobausrichtung enthält einen einzigen beweglichen Umlenkspiegel 1, welcher unter 45° zu dem am Teleskop senkrecht nach unten austretenden (Sendestrahl) oder dort senkrecht eintretenden (Empfangsstrahl) optischen Strahl angeordnet ist und damit in Ruhestellung eine 90°-Ablenkung des Strahls zur Seite bzw. entsprechend eine horizontale Sichtrichtung erzeugt.

Diese Sichtrichtung ist in aeronautischen Kommunikationsszenarien (Flugzeug-Flugzeug oder Flugzeug-Boden) dominierend. Um keine Beschneidung des Strahls zu verursachen, muss der Umlenkspiegel 1 bereits in dieser Stellung √2-mal so lang wie breit sein. Um einen noch größeren Sichtbereich nach unten zu ermöglichen, sollte er etwa 2-mal so lang wie breit sein.

Der ellipsenförmige oder ovale Umlenkspiegel 1 ist an zwei von einer mit einer zentralen Strahldurchlassöffnung versehenen, d.h. kreisringförmigen Grundplatte 2 in sich zueinander diametral gegenüberstehender Lage senkrecht nach unten abstehenden und damit parallel zur vertikalen Azimutdrehachse verlaufenden Stützen 3 und 4 einer Haltevorrichtung 5 in Elevationsrichtung motorisch schwenkbar gelagert, wobei hier noch angemerkt werden soll, dass die kurze Achse des ellipsenförmigen oder ovalen Umlenkspiegels 1 die Elevationsschwenkachse bildet. Die kürzere Achse der Spiegel-Umfangsellipse bzw. des Spiegel-Umfangsovals fällt im wesentlichen mit der Elevationsschwenkachse zusammen.

Der gesamte Aufbau von Umlenkspiegel 1 mit Haltevorrichtung 5 und Elevationselektromotor kann in Azimutrichtung um die vertikal verlaufende Azimutdrehachse gedreht werden. Um eine unbegrenzte Azimut-Drehbewegung zu ermöglichen, werden Kabelverbindungen zum Elevationselektromotor vermieden. Daher sind Kontakte über elektrische Schleifringe zur Übertragung der elektrischen Steuersignale vom und zum Elektromotor erforderlich.

Um den Grobausrichtemechanismus (CPA) vor Winddruck zu schützen, ist er von einem für die betreffende Strahlung transparenten kuppelartigen Dom 6 umgeben, der im dargestellten Ausführungsbeispiel nicht um die Azimutdrehachse drehbar ist, also starr an der Flugzeugoberfläche montiert ist. Der Drehmittelpunkt des Umlenkspiegels 1 befindet sich exakt im Mittelpunkt des sphärisch geformten Domes 6.

Fig.2 zeigt als Beispiel einen Strahlverlauf der Grobausrichtevorrichtung bei Verwendung einer besonders dicken Domschale 7 des sphärisch geformten Domes 6 und eines Umlenkspiegels 8. Diese dicke Domschale 7 wirkt als deutlich fokussierende Meniskuslinse, was dazu führt, dass der Strahldurchmesser innerhalb des Domes 6 bereits deutlich reduziert ist und damit einen kleineren Umlenkspiegel 8 erfordert.

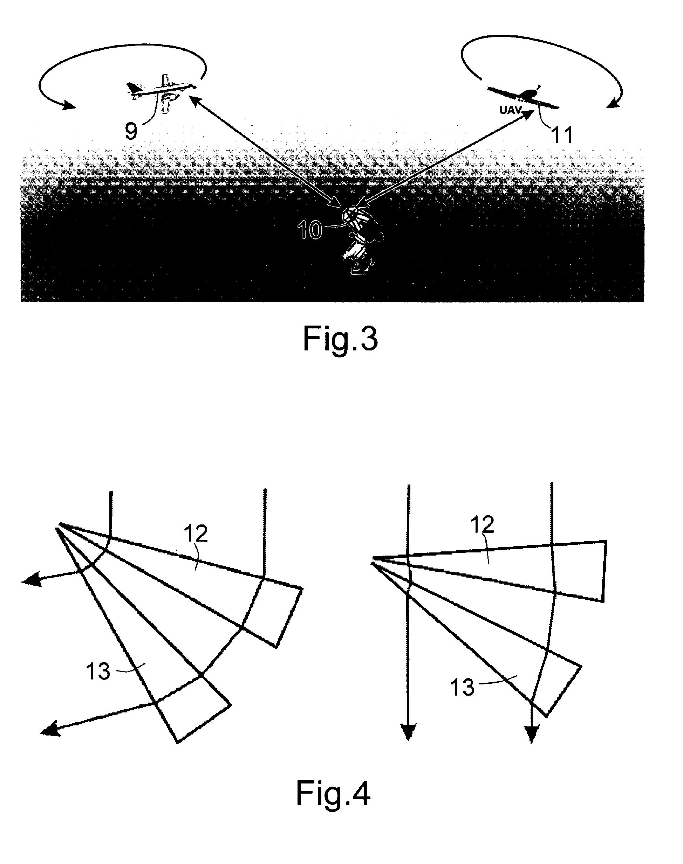

Fig.3 zeigt als Beispiel für eine Anwendung einer erfindungsgemäßen Vorrichtung zur Grobausrichtung eines optischen Strahls ein Kommunikationsszenario Flugzeug-Boden zwischen einem Flugzeug 9 und einem Bodengerät 10 und U-AV(Unmanned Air Vehicle; unbemanntes Fluggerät)-Boden zwischen einem unbemannten Fluggerät 11 und dem Bodengerät 10. Im dargestellten Beispiel kreisen das Flugzeug 9 und das unbemannte Fluggerät 11 über einem Beobachtungsgebiet. Hierbei ist eine unlimitierte Azimut-Drehbewegung der Vorrichtung zur Grobausrichtung erforderlich.

In Fig.4 ist die zweite Variante einer erfindungsgemäß ausgebildeten Vorrichtung zur Grobausrichtung dargestellt. Bei dieser Vorrichtung, mit der ebenfalls direkt nach unten geblickt werden kann, ist der einzige Umlenkspiegel in der Strahl-Ablenkeinrichtung durch eine Prismenanordnung mit zwei übereinander unter gegenseitigem Abstand angeordneten Prismenkeilen 12 und 13 ersetzt.

Es sind in Fig.4 nebeneinander zwei verschiedene Stellungen der beiden Prismenkeile 12 und 13 und die daraus resultierenden Strahlverläufe dargestellt. In der links dargestellten Stellung erfolgt der Blick zur Seite und in der rechts dargestellten Stellung der beiden Prismenkeile 12 und 13 ist die Blickrichtung senkrecht nach unten.

Durch Verkippen der Elevationsschwenkachse kann die aus den beiden Prismenkeilen 12 und 13 bestehende Prismenanordnung also zur Steuerung der seitlichen Ablenkung und Elevationswinkelregelung eingesetzt werden. Bei entsprechender Wahl der Prismenwinkel und des Glasmaterials kommt es zu keiner Beschneidung des Field of Regard (FoR) nach unten.

### Bezugszeichenliste

- 1: Umlenkspiegel
- 2: Kreisringförmige Grundplatte
- 3, 4: Stützen
- 5: Haltevorrichtung
- 6: Strahlungstransparenter Dom
- 7: Domschale
- 8: Umlenkspiegel
- 9: Flugzeug
- 10: Bodengerät
- 11: UAV (Unmanned Air Vehicle; Unbemanntes Fluggerät)
- 12, 13: Prismenkeile, Prismenanordnung

## Patentansprüche

1. Vorrichtung zur Grobausrichtung eines optischen Strahls, der über ein an einem fliegenden, fahrenden oder schwimmenden Träger fest angebrachtes Teleskop eines optischen Freiraumstrahl-Kommunikationsterminals empfangen oder über dieses ausgesendet wird, mittels einer unter Steuerung um eine Azimutdrehachse drehbaren und um eine Elevationsschwenkachse schwenkbaren, vor der Teleskopapertur angeordneten optischen Strahl-Ablenkeinrichtung, die entweder aus einem einzigen beweglichen ebenen Umlenkspiegel (1) besteht, der an einer Haltevorrichtung (5) um eine im wesentlichen horizontal verlaufende Achse, welche die Elevationsschwenkachse darstellt, schwenkbar gelagert ist, wobei die Haltevorrichtung die Teleskopapertur strahleinwirkungsfrei umgreift und als Ganzes um eine im wesentlichen vertikal verlaufende Achse, welche die Azimutdrehachse darstellt, drehbar gelagert ist und wobei der Umlenkspiegel in seiner durch die Stellung der Elevationsschwenkachse bestimmten, zentralen Ruhestellung unter etwa 45° zu dem in das Teleskop eintretenden bzw. aus diesem austretenden Strahl geneigt angeordnet ist, so dass er in dieser Ruhestellung etwa eine 90°-Ablenkung des Strahls zur Seite und dementsprechend etwa eine horizontale Sichtrichtung erzeugt, oder aber aus einer aus einem oder mehreren zueinander beabstandeten Prismenkeilen (12, 13) zusammengesetzten Prismenanordnung besteht, die an einer Haltevorrichtung um eine im wesentlichen horizontal verlaufende Achse, welche die Elevationsschwenkachse darstellt, schwenkbar gelagert ist, wobei die Haltevorrichtung die Teleskopapertur strahleinwirkungsfrei umgreift und als Ganzes um eine im wesentlichen vertikal verlaufende Achse, welche die Azimutdrehachse darstellt, drehbar gelagert ist und wobei die Prismenanordnung in ihrer durch die Stellung der Elevationsschwenkachse bestimmten, zentralen Ruhestellung so eingestellt ist, dass sie in dieser Ruhestellung etwa eine 90°-Ablenkung des Strahls zur Seite und dementsprechend etwa eine horizontale Sichtrichtung erzeugt, **dadurch gekennzeichnet, dass** die Strahl-Ablenkeinrichtung von einem kuppelartigen, für die benutzte Strahlung transparenten Dom (6) umgeben ist, der als Hemisphäre oder noch etwas größer als abgeschnittene Sphäre gestaltet ist und eine so bemessen dicke Schale (7) aufweist, dass diese als deutlich fokussierende Meniskuslinse wirkt, was dazu führt, dass der Strahldurchmesser innerhalb des Doms bereits deutlich reduziert ist, und dass das optische System des Teleskops so ausgelegt und durch Linsenelemente korrigiert ist, dass die vom strahlungstransparenten Dom (6) hervorgerufenen optischen Verzerrungen exakt berücksichtigt und korrigiert sind.

2. Vorrichtung nach Anspruch 1, **dadurch gekennzeichnet, dass** als strahlungstransparenter Dom eine sich mit dem Azimutdrehwinkel mitdrehende Haube vorgesehen ist, welche nur in Sichtrichtung vor der Strahl-Ablenkeinrichtung entlang des Elevationsbereichs ein strahlungstransparentes Sphärensegment aufweist, das als seitlich beschnittene Meniskuslinse ausgebildet ist, die in üblicher Linsensfertigungstechnologie aus einem Glaskörper geschliffen ist und zusätzlich mit einem Hintergrundlichtfilter versehen und durch Oberflächenhärtung beschichtet ist.

3. Vorrichtung nach Anspruch 1, **dadurch gekennzeichnet, dass** der Dom (6) nicht um die Azimutdrehachse drehbar, also starr am Träger montiert ist.

4. Vorrichtung nach Anspruch 1, **dadurch gekennzeichnet, dass** im Falle der Vorrichtungsvariante mit dem Umlenkspiegel (1) dieser ebene Umlenkspiegel eine elliptische oder ovale Umfangsform aufweist und dabei etwa √2-mal bis 2-mal so lang wie breit ist, wobei die kürzere Achse der Spiegel-Umfangsellipse bzw. des Spiegel-Umfangsovals im wesentlichen mit der Elevationsschwenkachse zusammenfällt.

5. Vorrichtung nach einem der vorhergehenden Ansprüche, **dadurch gekennzeichnet, dass** der Durchmesser des strahlungstransparenten Domes (6) auf etwa das Doppelte des effektiven optischen Aperturdurchmessers begrenzt ist, der im Falle der Vorrichtungsvariante mit dem Umlenkspiegel (1) der Länge der kleineren Achse des ellipsenförmigen bzw. ovalen Umlenkspiegels entspricht.

6. Vorrichtung nach Anspruch 1, **dadurch gekennzeichnet, dass** bei der einen Umlenkspiegel (1) aufweisenden Vorrichtungsvariante der Drehpunkt des Umlenkspiegels exakt in der Mitte des exakt sphärisch geformten Domes (6) positioniert ist, so dass die Abbildungsfehler in jeder Blickrichtung die gleichen sind und durch die Meniskuslinse modellierbar sind, und dass der Dom eine konstante Dicke aufweist.

7. Vorrichtung nach einem der vorhergehenden Ansprüche, **dadurch gekennzeichnet, dass** das Dommaterial zur Reduzierung des störenden Hintergrundlichtes mit einem optischen Filter für kürzere Wellenlängen beschichtet ist.

8. Vorrichtung nach einem der vorhergehenden Ansprüche, **dadurch gekennzeichnet, dass** die Kommunikationswellenlänge im nahen bis mittleren Infrarotbereich über 800 nm liegt, insbesondere aber nicht ausschließlich bei Wellenlängen von 850 nm oder 1550 nm.
